# EUROPÄISCHE PATENTSCHRIFT

(11) **EP 1 106 947 B1**
(45) Veröffentlichungstag und Bekanntmachung des Hinweises auf die Patenterteilung: **15.06.2005**
(21) Anmeldenummer: 00126863.0
(22) Anmeldetag: 07.12.2000
(51) Int. Cl.: F27B 9/02, B23K 1/015, F26B 15/10

(54) **Heizvorrichtung**
Heating device
Dispositif de chauffage

(30) Priorität: 09.12.1999 DE 29921643 U
(43) Veröffentlichungstag der Anmeldung: 13.06.2001
(73) Patentinhaber: Rehm Anlagenbau GmbH, 89143 Blaubeuren-Seissen (DE)
(72) Erfinder: Rehm, Johannes, 89143 Blaubeuren-Seissen (DE)
(74) Vertreter: Grünecker, Kinkeldey, Stockmair & Schwanhäusser Anwaltssozietät

(56) Entgegenhaltungen:
- EP-A- 0 908 928
- DE-A- 2 114 194
- FR-A- 1 239 486
- US-A- 5 958 330

## Beschreibung

Die Erfindung betrifft eine Heizvorrichtung zur Erwärmung von Warengut, mit den Merkmalen des Oberbegriffs des Patentanspruchs 1.

Eine solche Heizvorrichtung ist aus der FR-A-1239486 bekannt. Bei dieser Druckschrift erfolgt ein gleichzeitiges Zuführen eines entsprechenden Warenguts aus einem vertikal beweglichen Förderer in spezifischen Einrichtungen sowohl zum Beladen als auch zum Entleeren der entsprechenden Heizstraßen. Jeweils drei Paletten mit Warengut werden durch einen entsprechenden Schieber gleichzeitig drei Heizstraßen, die vertikal übereinander angeordnet sind, zugeführt. Nach Durchlaufen der Heizstraßen erfolgt dann eine entsprechende Abgabe an die weitere Fördereinrichtung. Auch hier erfolgt die Zuordnung von vertikal übereinander angeordneten Aufnahmen zu entsprechend angeordneten Heizstraßen, so dass ebenfalls eine Anzahl von Paletten mit Warengut gleichzeitig an den vertikalen Förderer auf der Abgabeseite abgegeben werden. Das heißt, sowohl bei der Beschickung werden jeweils alle Paletten mit Warengut gleichzeitig aus dem vertikalen Förderer an entsprechende Heizstraßen überführt und auch bei Abgabe der Paletten werden analog gleichzeitig von einer Reihe von Heizstraßen jeweils mehrere Paletten an den auf der Abgabeseite befindlichen vertikalen Förderer übergeben.

Aus der DE 297 04 601 ist eine weitere Heizvorrichtung bekannt. Einer sich dabei im wesentlichen quer zur Transportrichtung erstreckenden Heizstraße, die das Warengut in etwa kreisförmig herumführt, werden über entsprechende Zufuhr- und Abtransporteinrichtungen Leiterplatten als Warengut zugeführt bzw. von der Heizstraße abtransportiert. Zufuhr und Abtransport erfolgt in horizontalen Ebenen in Richtung der Transportrichtung, wobei diese horizontalen Ebenen versetzt zueinander angeordnet sein können. Entlang der Heizstraße sind eine Anzahl von Zonen oder Einrichtungen zum Aufheizen bzw. Abkühlen angeordnet. Die entsprechenden Heizzonen bzw. -einrichtungen dienen beispielsweise zum Wiederaufschmelzen von Lotpaste, das heißt zum sogenannten Reflow-Löten, zum Aushärten von Klebern zum Befestigen von Bauteilen auf den Leiterplatten, zum Trocknen von Lack auf den Leiterplatten oder dergleichen.

Eine entsprechende Heizzone kann beispielsweise durch einen Bereich der Heizstraße gebildet sein, in dem Heizluft zugeführt wird. Ebenso kann eine direkte Aufheizung durch eine Heizeinrichtung, wie eine Infrarotlampeneinrichtung oder dergleichen erfolgen. Eine Kühlzone kann z.B. zwischen zwei Heizzonen oder Heizeinrichtungen angeordnet sein, wobei die Kühlung einfach durch Abgabe von Wärme an die Umgebung in der Kühlzone erfolgen kann. Weiterhin kann auch eine aktive Kühleinrichtung vorhanden sein, die das Warengut auf eine bestimmte Temperatur abkühlt. Außerdem kann analog zu dem Heizgas ein Kühlgas in der Kühlzone entsprechend zu- und abgeführt werden.

Die vorbekannte Heizvorrichtung nach DE 297 04 601 ist aufgrund der Anordnung der Heizstraße sehr kompakt und effizient in der Ausnutzung von Heizgas und Kühlgas aufgrund der vertikal angeordneten Heizstraßenabschnitte. Allerdings ist der Durchsatz durch diese vorbekannte Heizvorrichtung nicht so groß, dass ohne eine Verzögerung der Zufuhr von Leiterplatten oder entsprechend aufwendige Puffereinrichtungen gearbeitet werden kann.

Der Erfindung liegt daher die Aufgabe zugrunde, der Heizvorrichtung der eingangs beschriebenen Art dahingehend zu verbessem, dass der Durchsatz von Warengut in einfacher Weise erhöht werden kann.

Diese Aufgabe wird durch die Merkmale des Oberbegriffs Anspruchs 1 gelöst.

Durch die erfindungsgemäßen Merkmale besteht die Möglichkeit, auch nur einer horizontal angeordneten Heizstraße aus der vertikalen Puffereinrichtung mehrere dort angeordneter Warengüter nacheinander zuzuführen. Dadurch ist beispielsweise erreichbar, dass unterschiedliche Warengüter gleichzeitig in der Heizeinrichtung auf unterschiedlichen Heizstraßen bearbeitet, allerdings nur einer Heizstraße jeweils zugeordnet werden. Das heißt, dass beispielsweise mehrere Leiterplatten einer Art in der vertikalen Puffereinrichtung angeordnet und nur einer Heizstraße zugeführt werden. Anschließend kann eine weitere Gruppe Leiterplatte einer anderen Art einer zweiten Heizstraße zugeführt werden, so dass die verschiedenen Arten von Leiterplatten jeweils durch dieselbe Heizstraße transportiert und entlang dieser entsprechend erwärmt oder abgekühlt werden. Dies gilt analog für die vertikale Puffereinrichtung auf der Abgabeseite, die entsprechend wieder die Leiterplatten der verschiedenen Arten einsammelt und dann über die horizontale Transportebene abtransportiert.

Eine solche Puffereinrichtung dient erfindungsgemäß dazu, Warengut zu bevorraten, bis es tatsächlich der Heizeinrichtung zugeführt wird. Entsprechend ist auf der Abgabeseite der Heizeinrichtung zu beachten, dass dort von einer Heizstraße die Puffereinrichtung befüllbar und entsprechend das Warengut auch dort bevorratet wird, bis es über die entsprechende Transportebene abtransportiert wird.

Erfindungsgemäß ergibt sich durch diese Pufferung eine schnellere Übergabe von Warengut sowohl auf der Eingabe- als auch der Ausgabeseite. Weiterhin besteht die Möglichkeit selektiv Warengut aus der Puffereinrichtung nur einer Heizstraße zuzuführen, beispielsweise bestimmtes Warengut dort in bestimmter Weise zu erhitzen und abzukühlen, in dem beispielsweise ein bestimmtes Temperaturprofil entlang der Heizstraße, das für dieses spezifische Warengut erforderlich ist, durchlaufen wird. Dabei können die anderen Heizstraßen andere Temperaturprofile aufweisen, die für andere Arten von Warengut vorgesehen sind. Gleichzeitig kann erfindungsgemäß auch die Abgabe der bearbeiteten Warengüter von nur einer Heizstraße und entsprechend eine Hintereinanderanordnung dieser spezifischen Warengüter in der Abtransportebene erfolgen.

Durch die Übereinanderordnung der wenigstens zwei Heizstraßen kann gleichzeitig im wesentlichen die doppelte Anzahl von Leiterplatten oder dergleichen als Warengut in der gleichen Zeit behandelt werden, ohne dass mehr oder Raum oder Zufuhr- und Abtransporteinrichtungen benötigt werden. Dadurch reduziert sich insgesamt die zur Bearbeitung von solchem Warengut benötigte Zeit bei gleichzeitiger Senkung entsprechender Kosten.

Die erfindungsgemäße Heizvorrichtung kann auch mehr als zwei Heizstraßen übereinander aufweisen, wobei beispielsweise bei drei, vier oder fünf Heizstraßen übereinander ebenfalls die Zufuhr und der Abtransport des Warenguts über die entsprechende Zufuhr- und Abtransporteinrichtungen separat erfolgt.

Weiterhin ist es erfindungsgemäß möglich, dass wenigstens zwei Heizstraßen nebeneinander angeordnet sind, wobei jede dieser Heizstraßen eine entsprechende Anzahl von Heizstraßen in darüber liegenden Ebenen aufweist.

Da die Aufheizung und/oder Abkühlung des Warenguts entlang der Heizstraßen in eine Schutzgasatmosphäre erfolgen kann, können entsprechende Schleuseneinrichtungen zwischen Heizstraße und Zuführ- und Abtransporteinrichtungen angeordnet sein. Durch eine solche Schleuseneinrichtung soll verhindert werden, dass Schutzgas in die Umgebung austritt, wodurch eine geschlossene Schutzgasatmosphäre gewährleistet ist.

Um in einfacher Weise das Schutzgas aus der Schleuseneinrichtung abzuführen, kann jede dieser Schleuseneinrichtungen einen Absauger aufweisen.

Bei der Behandlung insbesondere von Leiterplatten als Warengut ist es in der Regel von Vorteil, wenn die Aufheizung in bestimmter Zeit und/oder mit einem bestimmten Temperaturgradienten, eine Bearbeitung bei einem bestimmten Temperaturniveau für eine vorbestimmte Zeit und in analoger Weise eine Abkühlung gegebenenfalls auch Zwischenaufheizung erfolgt. Dies kann günstiger weise dadurch erfolgen, dass entlang der Heizstraße eine vorbestimmtes, insbesondere vorprogrammierbares Temperaturprofil einstellbar ist. Dieses wird dann durch die entsprechende Heizzonen/-einrichtungen und/oder Kühlzonen/-einrichtungen und deren Ansteuerung realisiert.

. Um in der erfindungsgemäßen Heizvorrichtung in der horizontalen Transportebene von außen zugeführtes Warengut direkt wenigstens einer Heizstraße ohne Anheben oder Absenken des Warenguts zuführen zu können, kann wenigstens eine dieser Heizstraßen in der horizontalen Transportebene angeordnet sein. Dabei ist ebenfalls der Abtransport des Warenguts von dieser Heizstraße vereinfacht, da ohne weiteres Anheben oder Absenken über die Abtransporteinrichtung das Warengut direkt in die horizontale Transportebene überführbar und in dieser Ebene weitertransportierbar ist.

Zur vereinfachten Anbindung an Vor- bzw. Nachbehandlungseinrichtungen für das Warengut, können Zufuhr- und/oder Abtransporteinrichtung einen in Transportrichtung vor- bzw. nachgeordneten Transporteur aufweisen, über den das Warengut der bzw. von der Heizvorrichtung von außen zuführbar bzw. entnehmbar ist. Über diese Transporteure erfolgt der Transport des Warenguts beispielsweise zu einer in Transportrichtung nachgeordneten Nachbehandlungseinrichtung oder in analoger Weise von einer Vorbehandlungseinrichtung in Richtung Heizvorrichtung.

Die Transporteure können zusammen mit den übrigen Bauteilen der erfindungsgemäßen Heizvorrichtung in einem Gehäuse angeordnet sein. Um zu verhindern, dass aus diesem Gehäuse bei den Transporteuren Schutzgas austritt, kann diesen eine Schleuseneinrichtung mit insbesondere Absaugem zugeordnet sein. Diese Schleuseneinrichtung kann wie die Schleuseneinrichtungen zwischen Heizstraße und Zuführ- und Abtransporteinrichtung ausgebildet sein.

Es besteht die Möglichkeit, das Warengut entlang der entsprechenden Heizstraße passiv zu transportieren, das heißt Warengut wird von dem jeweils nachfolgenden Warengut beispielsweise entlang von Gleitschienen oder dergleichen vorangeschoben. Um allerdings das Warengut mit Abstand zueinander transportieren zu können und die Transportgeschwindigkeit gegebenenfalls ändern zu können, kann ein Ofentransporteur entlang jeder Heizstraße angeordnet sein. Ein solcher Ofentransporteur kann beispielsweise durch angetriebene Rollen, angetriebene Bänder, einen angetriebenen Warengutträger oder dergleichen gebildet sein.

Um in einfacher Weise Warengut direkt von einem Transporteur dem Ofentransporteur durch die Zufuhr- oder Abtransporteinrichtung zuführen zu können, können diese eine Durchschleuseinrichtung aufweisen, die Transporteur und Ofentransporteur in der horizontalen Transportebene verbindet.

Um in einer solchen Durchschleuseinrichtung das Warengut in Richtung Ofentransporteur vorwärts bewegen zu können, kann die Durchschleuseinrichtung einen in Transportrichtung bewegbaren Schieber oder Warengutträger aufweisen. In analoger Weise kann ein solcher Schieber oder Warengutträger ebenfalls in der Abtransporteinrichtung angeordnet sein.

Eine weitere Möglichkeit zur Bewegung des Warenguts in der Durchschleuseinrichtung kann darin gesehen, dass diese drehbare Transportrollen aufweist. Diese können sich quer zur Transportrichtung über die gesamte Breite des Warenguts erstrecken oder dieses entlang von Längskanten abstützen.

Um Schieber oder Warengutträger in einfacher Weise umlaufend benutzen zu können, können diese entgegengesetzt zur Transportrichtung unterhalb der horizontalen Transportebene in eine dem Transporteur zugeordnete Ausgangsstellung zurückbewegbar gelagert sein.

Bei einem Schieber ist es in diesem Zusammenhang als vorteilhaft zu betrachten, wenn dieser in vertikaler Richtung höhenverstellbar ist. Während seines Einsatzes ist er dabei vertikal nach oben verstellt, um ein Warengut vom Transporteur in die Durchschleuseinrichtung zu schieben. Anschließend kann er in vertikaler Richtung nach unten bewegt werden, um auf seinem Rückweg unterhalb der horizontalen Transportebene ohne störenden Einfluss auf weitere Schieber oder weiteres Warengut bewegt zu werden. Dabei kann der Schieber einen Hubmechanismus im wesentlichen zur vertikalen Höhenverstellung und eine im wesentlichen zwischen Ausgangsstellung und der Heizstraße zugeordneten Abgabestellung des Schiebers bewegbare Antriebseinrichtung aufweisen.

Um direkt innerhalb von Zufuhr- und/oder Abtransporteinrichtung das Warengut entsprechend zu den verschiedenen Heizstraßen anheben bzw. absenken zu können, können zur Höhenverstellung des Warenguts zwischen übereinander angeordneten Heizstraßen Zufuhr- und/oder Abtransporteinrichtung eine Hubeinrichtung aufweisen.

Im einfachsten Fall kann die Hubeinrichtung die horizontale Transportebene, insbesondere in der Durchschleuseinrichtung, und eine vertikal oberhalb dieser angeordnete, obere Transportebene miteinander verbinden. Beispielsweise kann die obere Transportebene mit der Ebene einer Heizstraße übereinstimmen, die über der in der horizontalen Transportebene angeordneten Heizstraße liegt.

Wenn der Abstand von horizontaler und oberer Transportebene groß genug ist, kann die Hubeinrichtung zwischen horizontaler und oberer Transportebene angeordnete Transportebenen als Puffereinrichtung aufweisen.

Bei einem einfachen Ausführungsbeispiel kann die Hubeinrichtung zwischen horizontaler und oberer Transportebene umlaufende Zahnketten mit das Warengut an zumindest drei Stellen untergreifenden und im wesentlichen in Richtung Warengut vorstehenden Transportzähnen aufweisen. Durch diese drei Stellen soll das Warengut in einer horizontalen Ebene gehalten werden und durch synchrone Bewegung der umlaufenden Zahnketten zwischen den verschiedenen Transportebenen bewegt werden.

Zum sicheren Transport und zur sicheren Abstützung von Warengut können dabei jeweils zwei Zahnketten einander gegenüberliegend an in Transportrichtung hinteren und an in Transportrichtung vorderen Seitenenden des im wesentlichen plattenförmigen Warenguts angeordnet sein. Dabei untergreifen insgesamt vier Transportzähne das Warengut.

Um sowohl in der Durchschleuseinrichtung eine Zufuhr zu einer Heizstraße zu ermöglichen, Warengut in vertikaler Richtung in der Puffereinrichtung zu bewegen und in der oberen Transportebene an die wenigstens eine weitere Heizstraße abgeben zu können, kann die Bewegung der Hubeinrichtung getaktet sein. In einem ersten Takt wird beispielsweise aus der Durchschleuseinrichtung ein Warengut an die in der horizontalen Transportebene angeordneten Heizstraße überführt. Im nächsten Takt wird ein weiteres Warengut der Durchschleuseinrichtung zugeführt und anschließend in einer Transportebene der Puffereinrichtung angeordnet. In den weiteren Takten wird jeweils ein weiteres Warengut der Durchschleuseinrichtung zugeführt und ebenfalls vertikal angehoben, bis beispielsweise die Puffereinrichtung gefüllt ist und in der oberen Transportebene ebenfalls ein Warengut angeordnet ist. Bei gefüllter Puffereinrichtung kann jeweils gleichzeitig in der oberen und in der horizontalen Transportebene ein Warengut der jeweiligen Heizstraße zugeführt werden. Anschließend wird aus der Puffereinrichtung ein Warengut der oberen Transportebene und aus der Durchschleuseinrichtung ein weiteres Warengut wieder der Puffereinrichtung zugeführt und anschließend ein Warengut in der Durchschleuseinrichtung angeordnet. Dann kann wiederum eine Beschickung der beiden Heizstraßen erfolgen.

In analoger Weise erfolgt der Abtransport von Warengut durch die Abtransporteinrichtung mit entsprechender Puffereinrichtung.

Um in der oberen Transportebene Warengut an die entsprechende Heizstraße überführen zu können, kann auch dieser wenigstens ein Schieber oder Warengutträger zur Übergabe des Warenguts an die Heizstraße zugeordnet sein. Der Schieber bzw. Warengutträger können wie die entsprechenden Einrichtungen bei der horizontalen Transportebene und insbesondere dem dortigen Transporteur ausgebildet sein, das heißt einen Hubmechanismus und eine entsprechende Antriebseinrichtung aufweisen. Ebenso sind beispielsweise angetriebene Transportrollen in der oberen Transportebene anordnenbar.

. Im einfachsten Fall können die Hubeinrichtungen von Zuführ- und Abtransporteinrichtungen , gleichartig aufgebaut sein. Eine Hubeinrichtung dient dabei nur zum Anheben und die andere zum Absenken des Warenguts.

Bei einem anderen Ausführungsbeispiel der Hubeinrichtung kann diese eine Anordnung aus vertikal und/oder senkrecht zur Transportrichtung verstellbaren, nebeneinander angeordneten Hub- und Haltegabeln aufweisen, welche jeweils eine Anzahl von in Richtung Warengut vorstehenden Transportzähnen aufweisen. Insbesondere die Hubgabeln bewegen sich dabei vertikal und senkrecht zur Transportrichtung. Bei der Vertikalbewegung der Hubgabeln wird entsprechend aufgelegtes Warengut angehoben, wobei zugeordnete Haltegabeln bezüglich der Transportrichtung nach außen weggefahren sind. Nach Heranfahren der Haltegabeln untergreifen diese mit den entsprechenden Transportzähnen das Warengut und die Hubgabeln können nach außen weggefahren werden. Diese werden anschließend um im wesentlichen eine Transportebene vertikal nach unten versetzt, wo sie wiederum ein entsprechendes Warengut untergreifen. Dann wiederholt sich der vorangehende Vorgang, so dass durch das Zusammenwirken von Hub- und Haltegabeln getaktet Warengut angehoben oder bei entsprechender Umkehrung der Bewegungen abgesenkt wird.

Das Zusammenwirken von Hub- und Haltegabeln kann auch entsprechend so erfolgen, dass einer Hubgabel zwei Haltegabeln zugeordnet sind, wobei sich die Hubgabel dann zwischen diesen beiden Haltegabeln befindet. Das heißt, einer Haltegabel bzw. einer Hubgabel können jeweils zwei an ihren in Transportrichtung liegenden Enden angeordnete Hubgabeln bzw. Haltegabeln zugeordnet sein.

Um in der horizontalen oberen Transportebene aus dem Bereich der Hub- oder Haltegabeln Warengut in einfacher Weise abtransportieren zu können, können angetriebene Transportrollen zumindest im Bereich von horizontaler und oberer Transportebene an den Hubund/oder Haltegabeln angeordnet sein.

Ein einfaches Ausführungsbeispiel zum Transport des Warenguts ergibt sich beispielsweise dadurch, dass Transporteur und/oder Ofentransporteur zwei parallel zur Transportrichtung umlaufende und voneinander beabstandete Transportbänder aufweisen, auf denen seitliche Kanten des Warenguts aufliegen.

Um die erfindungsgemäße Heizvorrichtung in einfacher Weise erweitern oder an geänderte Bedingungen anpassen zu können, können die Heizstraßen und/oder Zuführ- und/oder Abtransporteinrichtungen und/oder Transporteure als Module ausgebildet sein.

Im folgenden werden vorteilhafte Ausführungsbeispiele anhand der in der Zeichnung beigefügten Figuren näher erläutert.

Es zeigen:
- Fig. 1: eine teilweise geschnittene Seitenansicht einer erfindungsgemäßen Heizvorrichtung in Transportrichtung;
- Fig. 2: eine Vorderansicht der Heizvorrichtung aus Figur 1;
- Fig. 3: eine teilweise dargestellte Schnittdarstellung der Heizvorrichtung aus Figur 1 mit Schieber;
- Fig. 4: einen Schnitt entlang der Linie IV-IV aus Figur 3;
- Fig. 5: eine teilweise dargestellte Seitenansicht der Heizvorrichtung nach Figur 1 mit Transportrollen;
- Fig. 6: ein Schnitt entlang der Linie VI-VI aus Figur 5, und
- Fig. 7: eine perspektivische Darstellung eines Schnitts entlang der Linie VII-VII aus Figur 6.

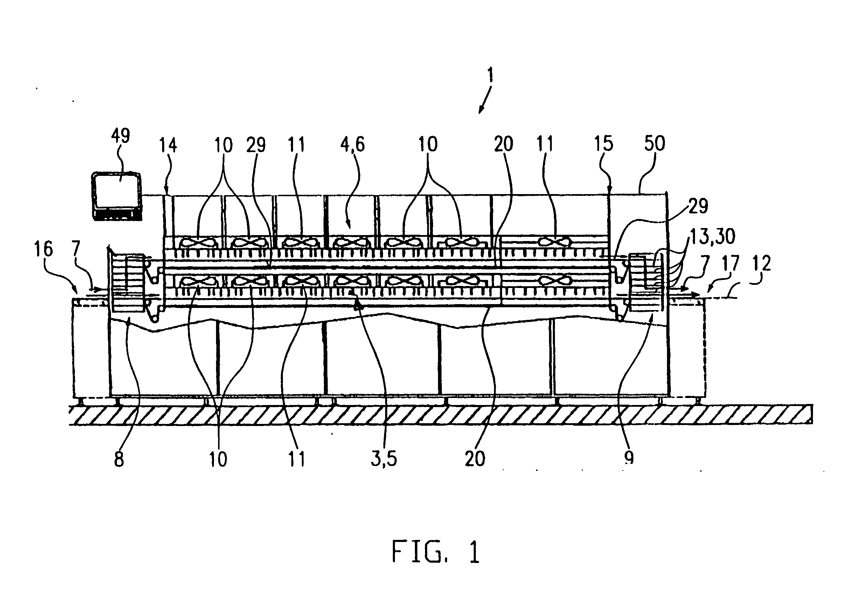

In Figur 1 ist die gesamte Heizvorrichtung 1 in einer Seitenansicht und teilweise geschnitten dargestellt. Die Heizvorrichtung 1 weist eine Reihe von entlang von Heizstraßen 3, 4, 5, 6 angeordneten Heizzonen 10 bzw. Kühlzonen 11 auf. Die Heizzonen können über entsprechende Heizeinrichtungen wie auch die Kühlzonen über entsprechende aktive Kühleinrichtungen verfügen. Die Heizstraßen 3 und 5 sind in einer horizontalen Transportebene 12 nebeneinander und parallel zueinander angeordnet. Von diesen Heizstraßen ist die Heizstraße direkt sichtbar, während die Heizstraße 5 in der Figurenebene hinter der Heizstraße 3 liegt. Oberhalb der Heizstraßen 3, 5 sind in einer oberen Transportebene 29 die weiteren Heizstraßen 4, 6 angeordnet, wobei die Heizstraße 4 vertikal oberhalb der Heizstraße 3 und die Heizstraße 6 vertikal oberhalb der Heizstraße 5 liegt.

Die verschiedenen Heizzonen können beispielsweise zum Wiederaufschmelzen von Lotpaste (Reflow-Löten), zum Aushärten von Klebem zum Befestigen von Bauteilen auf Leiterplatten, zum Trocknen von Lack auf der Leiterplatte oder dergleichen verwendet werden. Eine weitere Anwendung ist das sogenannte Dampfphasen- oder Kondensationslösen (VP (Vapor Phase)-Löten). Dabei kann in wenigstens einer der Heizstraßen 3 bis 6 eine entsprechende Absenkung vorgesehen sein, durch die Leiterplatten in eine Dampfdecke oberhalb einer siedenden Arbeitsflüssigkeit abgesenkt und dort das entsprechende Lötmittel über die Dampfphase auf die Leiterplatte übertragen wird. Anschließend wird die Leiterplatte aus der Dampfdecke wieder angehoben und entlang beispielsweise der horizontalen Transportebene 12 weiterbewegt. Entsprechende Schleusensysteme zur Abschottung der Dampfzone können für das VP-Löten ebenfalls entlang einer Heizstraße angeordnet sein.

Weitere Schleusensysteme können zwischen den verschiedenen Heizzonen und/oder Kühlzonen je nach Bedarf angeordnet werden. Zumindest an den Enden der entsprechenden Heizstraßen sind Schleuseneinrichtungen 14, 15 angeordnet, durch die ein entsprechendes Schutzgas innerhalb der Heizvorrichtung 1 an einem Austritt in die Umgebung gehindert wird.

Den Heizstraßen 4 bis 6 vor- und nachgeordnet ist jeweils eine Zufuhreinrichtung 8 bzw. eine Abtransporteinrichtung 9 angeordnet. Über die Zufuhreinrichtung 8 erfolgt eine separate Beschickung der übereinander angeordneten Heizstraßen 3, 4 bzw. 5, 6. Durch die Abtransporteinrichtung 9 erfolgt ein separate Rückführung von entlang der Heizstraßen behandelten Leiterplatten zurück in die horizontale Transportebene 12.

Zwischen horizontaler und oberer Transportebene 12, 29 sind im Bereich der Zufuhreinrichtung 8 und Abtransporteinrichtung 9 verschiedene weitere Transportebenen 30 angeordnet, die als Puffereinrichtung 13 dienen. Im Bereich der Transportebene 30 der Puffereinrichtung 13 erfolgt eine vertikale Anhebung oder Absenkung des entsprechenden Warenguts, wie beispielsweise der Leiterplatten, in der Zufuhreinrichtung 8 und der Abtransporteinrichtung 9. In der horizontalen und der oberen Transportebene 12, 29 erfolgt jeweils die Übergabe an die Heizstraßen bzw. die Übernahme des Warenguts von den Heizstraßen.

Der Zufuhreinrichtung 8 ist in Transportrichtung 7 des Warenguts ein Transporteur 16 vorgeordnet, der ebenfalls Teil der Heizvorrichtung 1 ist. In analoger Weise ist ein weiterer Transporteur 17 der Abtransporteinrichtung 9 in Transportrichtung 7 nachgeordnet. Die Transporteure 16, 17 dienen zur Zufuhr von Warengut zur Heizvorrichtung 1 bzw. zum entsprechenden Abtransport des Warenguts an weitere Vorrichtungen oder dergleichen.

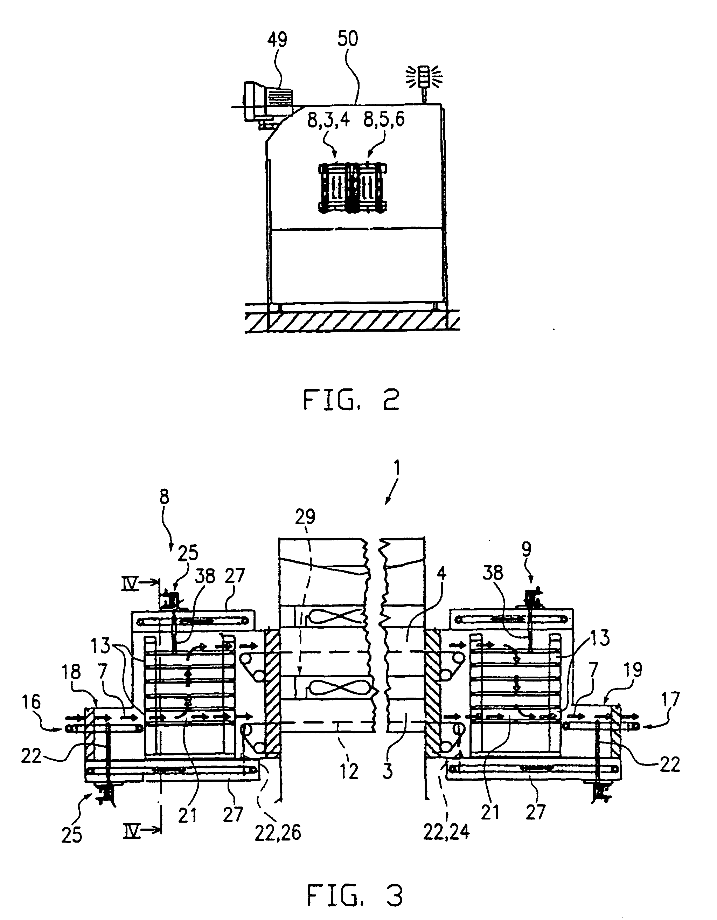

Die Heizstraßen 3 bis 6 und zumindest auch die Zufuhreinrichtung 8 sowie Abtransporteinrichtung 9 sind in einem Vorrichtungsgehäuse 50 angeordnet, das die Transporteuren 16, 17 enthalten kann, siehe beispielsweise Figur 3.

Entlang der verschiedenen Heizstraßen ist ein vorbestimmtes und beispielsweise mittels eines Computers 49 vorprogrammierbares Temperaturprofil zur Behandlung des Warenguts einstellbar. Durch die Übereinander- und Nebeneinanderanordnung der verschiedenen Heizstraßen 3, 4 und 5, 6 sowie die entsprechenden Puffereinrichtungen in Zufuhreinrichtung 8 und Abtransporteinrichtung 9 kann durch die erfindungsgemäße Heizvorrichtung 1 ein großer Durchsatz erzielt werden, so dass beispielsweise Leiterplatten als Warengut in großer Anzahl und relativ schnell durch die Heizvorrichtung 1 bearbeitbar sind.

Es ist selbstverständlich, dass in jeder der verschiedenen Heizzonen bzw. Kühlzonen jeweils eine oder gegebenenfalls auch mehrere Leiterplatten hintereinander entlang einer Heizstraße angeordnet und bearbeitet werden können.

In Figur 2 ist eine Vorderansicht der Heizvorrichtung 1 aus Figur 1 dargestellt. Es ist insbesondere erkennbar, dass ebenfalls zwei Zufuhreinrichtungen 8 nebeneinander angeordnet sind, um die paarweise übereinander angeordneten Heizstraßen 3, 4 und 5, 6 entsprechend mit Leiterplatten zu versorgen.

In Figur 3 ist die Heizvorrichtung 1 für ein Ausführungsbeispiel von Zufuhreinrichtung 8 und Abtransporteinrichtung 9 im Detail dargestellt. In dieser Figur wie in den weiteren Figuren werden gleiche Teile jeweils mit gleichen Bezugszeichen versehen, wobei einige Teile gegebenenfalls nur im Zusammenhang mit einer Figur beschrieben werden.

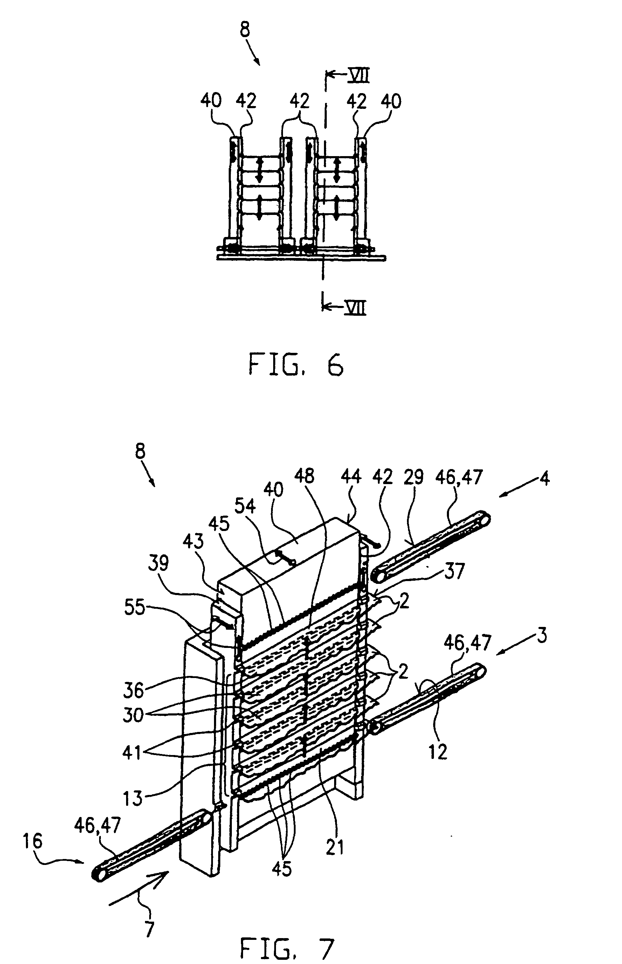

In Figur 3 wie auch in Figur 5 sind Zufuhreinrichtung 8 und Abtransporteinrichtung 9 gleichartig aufgebaut, wobei in der Zufuhreinrichtung 8 entsprechend ein Anheben der Leiterplatten und Zufuhr zu den verschiedenen Heizstraßen und in der Abtransporteinrichtung 9 ein Absenken und ein Entnehmen der Leiterplatten von den verschiedenen Heizstraßen erfolgt.

In den Figuren 3 und 5 sind die Transporteure 16, 17 zumindest teilweise innerhalb des Vorrichtungsgehäuses 50, siehe auch Figur 1, angeordnet. Weitere Schleuseneinrichtungen 18, 19 sind den Transporteuren 16, 17 zugeordnet, um gegebenenfalls noch mitgeführtes Schutzgas an einem Austreten aus der Heizvorrichtung 1 zu hindern.

Die Transporteure 16, 17 sind durch zwei voneinander senkrecht zur Transportrichtung 7 getrennte, umlaufende Transportbänder gebildet, die das Warengut entlang von Seitenkanten abstützen. Zwischen den beiden Transportbändern kann ein Schieber 22 eingreifen. Dieser bewegt das Warengut durch eine Durchschleuseinrichtung 21 in Richtung Heizstraße 3. Die Durchschleuseinrichtung 21 ist die unterste Transportebene der Zufuhreinrichtung 8, die der horizontalen Transportebene 12 entspricht. Zur Verstellung des Schiebers 22 in Transportrichtung 7 ist dieser mit einer Antriebseinrichtung 27 in Form einer umlaufenden Antriebskette oder dergleichen bewegungsverbunden. In Figur 3 ist der Schieber 22 in etwa in seiner Ausgangsstellung 24 angeordnet, in der er hinter ein Warengut auf dem Transporteur 16 eingreift und dieses bis zur Abgabestellung 26 entlang der horizontalen Transportebene 12 in Transportrichtung 7 verschieben kann. Um den Schieber 22 aus seiner Abgabestellung 26 in die Ausgangsstellung 24 ohne Behinderung beispielsweise einer bis in die Durchschleuseinrichtung 21 transportierten Leiterplatte zurückbewegen zu können, ist der Schieber 22 mit einem Hubmechanismus 25 verbunden, der den Schieber in vertikaler Richtung anheben bzw. absenken kann.

Ein entsprechender Schieber 38 ist mit analoger Antriebseinrichtung 27 und Hubmechanismus 25 für die obere Transportebene 29 in der Zufuhreinrichtung 8 vorgesehen. Dort dient dieser Schieber zur Übergabe des Warenguts an die obere Heizstraße 4.

Die Abtransporteinrichtung 9 ist, wie bereits ausgeführt, analog aufgebaut, wobei die entsprechenden Schieber 38, 22 in umgekehrter Richtung zur Übernahme von Warengut in die Abtransporteinrichtung 9 bzw. zur Übergabe an den Transporteur 17 dienen.

Bei dem Ausführungsbeispiel nach Figur 3 sind vier Transportebenen 30 als Puffereinrichtung 13 zwischen horizontaler und oberer Transportebene 12, 29 angeordnet. Durch getakteten Betrieb von Zufuhreinrichtung 8 bzw. Abtransporteinrichtung 9 wird Warengut durch die verschiedenen Transportebenen 30 von der horizontalen Transportebene 12 bis zur oberen Transportebene 29 angehoben bzw. in der Abtransporteinrichtung 9 in umgekehrter Richtung abgesenkt.

Zum Transport des Warenguts entlang der verschiedenen Heizstraßen 3, 4 sind entsprechende Transportbänder 46, 47 vorgesehen, die ebenfalls paarweise nebeneinander zur Unterstützung des plattenförmigen Warenguts entlang von Seitenkanten in Transportrichtung umlaufen, siehe auch Figur 5.

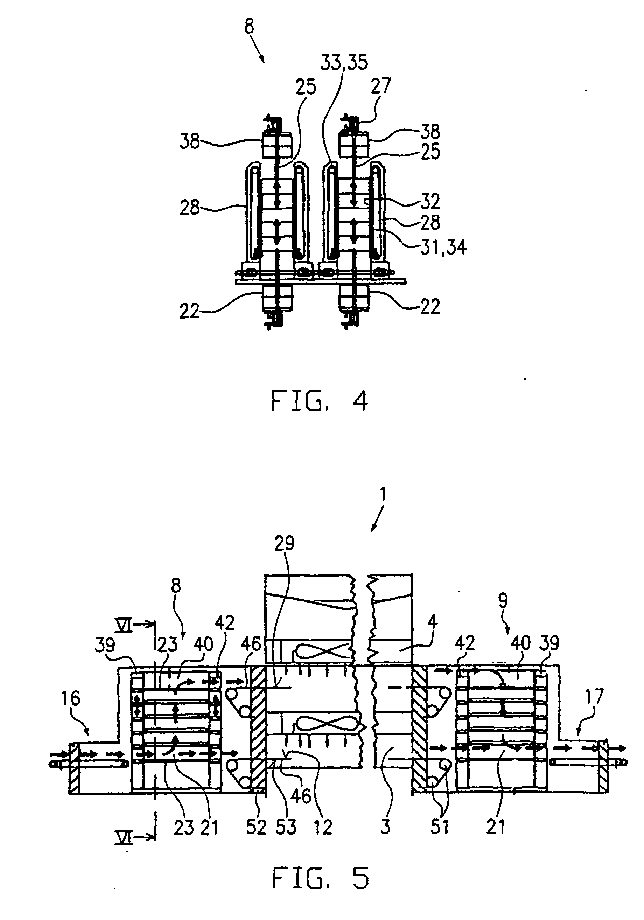

In Figur 4 ist ein Schnitt durch die Zufuhreinrichtung 8 entlang der Linie IV-IV aus Figur 3 dargestellt.

Nebeneinander sind zwei Hubeinrichtungen 28 angeordnet, durch die die Zufuhreinrichtung 8 zwei paarweise nebeneinander angeordnete Heizstraßen mit entsprechendem Warengut versorgen kann. Die Hubeinrichtung 28 ist durch in vertikaler Richtung umlaufende Zahnkette oder Zahnriemen 31, 33, 34, 35 gebildet, von denen entsprechende Transportzähne 32 in Richtung Warengut abstehen. Die Zahnketten 31, 33, 34, 35 sind jeweils paarweise an in Transportrichtung 7 vorderen und hinteren Enden des Warenguts innerhalb der Zufuhreinrichtung 8 angeordnet, siehe auch Figur 3. Die entsprechenden Transportzähnen 32 untergreifen beidseitig hintere und vordere Seitenenden 36, 37 des Warenguts, siehe auch Figur 7. Durch Bewegung der Zahnketten werden entsprechend Leiterplatten als Warengut in der Zufuhreinrichtung 8 angehoben und in der Abtransporteinrichtung 9 abgesenkt. Die verschiedenen Zahnketten werden synchron angetrieben, um die Leiterplatten jeweils in der entsprechenden Transportebene oder horizontalen bzw. oberen Transportebene auszurichten.

Die verschiedenen Schieber 22, 38 in Figur 4 sind in ihrer entlang der zugeordneten Hubmechanismen 25 von Zufuhreinrichtung 8 zurückgezogenen Stellung dargestellt, in welcher sie nicht zwischen hintereinander in Transportrichtung 7 angeordnete Leiterplatten zu deren Verschiebung eingreifen.

In Figur 5 ist die Heizvorrichtung 1 mit einem zweiten Ausführungsbeispiel für Zufuhreinrichtung 8 und Abtransporteinrichtung 9 dargestellt. Ansonsten entspricht der Aufbau der Heizvorrichtung 1 nach Figur 3 mit entsprechenden Heizstraßen und Transporteuren 16, 17.

Die Zufuhreinrichtung 8 und die wiederum gleich aufgebaute Abtransporteinrichtung 9 weisen in Figur 5 eine Haltegabel 40 und an deren Ende 43, 44, siehe Figur 7, angeordnete Hubgabeln 39, 42 auf. Diese sind jeweils paarweise quer zur Transportrichtung beidseitig zur entsprechenden Leiterplatte angeordnet.

Die Hubgabeln 39, 42 sind sowohl in vertikaler Richtung als auch senkrecht hierzu verstellbar, siehe die Verstellrichtungen 55 in Figur 7. Die Haltegabel 40 ist senkrecht zur Transportrichtung 7 in Verstellrichtung 54, siehe wiederum Figur 7, verstellbar. Im Bereich von horizontaler und oberer Transportebene 12, 29 sind an der Haltegabel 40 Transportrollen 45 angeordnet, die zur Beförderung der Leiterplatten 2 in Transportrichtung 7 angetrieben sind. In den zwischen horizontaler und oberer Transportebene angeordneten Transportebenen 30 der Puffereinrichtung 13 sind entsprechende Transportzähne 41 oder Transportleisten 41 angeordnet, wobei sich die Transportzähne bzw. Transportleisten jeweils über die gesamte Länge von Hubelgabeln 39, 42 bzw. Haltegabel 40 in Transportrichtung 7 erstrecken können.

Die Transportbänder 46 und 47 der verschiedenen Heizstraßen sind über Antriebs- und Umlenkrollen 51 bewegt, wobei sich jedes Transportband aus einem in Transportrichtung 7 bewegten Obertrum 53 und einem in entgegengesetzter Richtung bewegten Untertrum 52 zusammensetzt.

In Figur 6 ist ein Schnitt entlang der Linie VI-VI aus Figur 5 dargestellt. Die Haltegabel 40 mit Hubgabeln 39, 42 sind paarweise einander gegenüberliegend angeordnet, um entsprechend paarweise nebeneinander und übereinander angeordnete Heizstraßen 3, 4 und 5, 6, siehe beispielsweise Figur 1, mit entsprechenden Leiterplatten versorgen zu können. Es sei nochmals darauf hingewiesen, dass die Abtransporteinrichtung 9 analog aufgebaut ist und diesbezüglich auf die Beschreibung der Zufuhreinrichtung 8 verwiesen wird.

In Figur 7 ist ein Schnitt entlang der Linie VII-VII aus Figur 6 in perspektivischer Ansicht dargestellt.

In den Transportebenen 30 der Puffereinrichtung 13 sowie der horizontalen Transportebene 12 sind entsprechende Leiterplatten 2 dargestellt. Bei dem Arbeitstakt der Zufuhreinrichtung 8 nach Figur 7 ist die Haltegabel 40 senkrecht zu der Transportrichtung 7 nach außen verschoben, so dass die Leiterplatten 2 an ihren hinteren und vorderen Seitenenden 36, 37 beidseitig auf entsprechenden Transportzähnen 41 der Hubgabeln 39, 42 aufliegen. In einem darauffolgenden Arbeitstakt werden die Hubgabeln 39, 42 in vertikaler Richtung nach oben verschoben, bis alle Leiterplatten 2 um eine Transportebene nach oben angehoben sind. Anschließend wird die Haltegabel 40 auf die Leiterplatten zu bewegt, bis die in Figur 7 als oberste dargestellte Leiterplatte 2 auf den Transportrollen 45 in der oberen Transportebene 29 aufliegt. Um eine weitere Leiterplatte in der horizontalen Transportebene 12 anzuordnen und anschließend anheben zu können, werden die Hubgabeln 39, 42 vertikal nach unten verschoben und nach erreichen ihrer abgesenkten Stellung wieder an die Leiterplatten mit ihren Transportzähnen 41 angenähert. Darauffolgend kann durch die Transportbänder 46, 47 des Transporteurs 16 eine weitere Leiterplatte in der horizontalen Transportebene 12 in die Durchschleuseinrichtung 21 eingeschoben und anschließend in die in Transportrichtung 7 nachfolgende Heizstraße 3 durch die Transportrollen 45 der Haltegabel 40 weitertransportiert werden. Gleichzeitig kann ebenfalls die Leiterplatte in der oberen Transportebene 29 an die Heizstraße 4 übergeben werden.

Durch entsprechende weitere Arbeitstakte von Hubgabeln 39, 42 und Haltegabel 40 sind weitere Leiterplatten der oberen Transportebene 29 bzw. über die Transportebenen 12, 29 an die jeweiligen Heizstraßen 3, 4 überführbar.

Die Funktion der Abtransporteinrichtung 9 erfolgt analog, wobei Haltegabel 40 und Hubgabeln 39, 42 zur Entnahme und zum Absenken der Leiterplatten eingesetzt werden.

## Patentansprüche

1. Heizvorrichtung (1) zur Erwärmung von Warengut (2), insbesondere Leiterplatten, mit einer wenigstens einer Heizstraße (3, 4, 5, 6) in Transportrichtung (7) des Warenguts (2) vorgeordneten Zufuhreinrichtung (8) und einer der Heizstraße (3, 4, 5, 6) in Transportrichtung (7) nachgeordneten Abtransporteinrichtung (9), wobei der Heizstraße eine Anzahl von Heizzonen/-einrichtungen (10) und/oder Kühlzonen-/einrichtungen (11) oder dergleichen zugeordnet sind, wobei wenigstens zwei Heizstraßen (3, 4; 5, 6) übereinander angeordnet sind, denen separat von der Zufuhreinrichtung (8) Warengut (2) aus einer horizontalen Transportebene zuführbar ist und dass das Warengut separat von den Heizstraßen von der Abtransporteinrichtung (9) zurück in eine horizontale Transportebene (12) abführbar ist, **dadurch gekennzeichnet, dass** Zufuhr- und Abtransporteinrichtung (8, 9) eine Vertikalpuffereinrichtung (13) zur Zwischenspeicherung einer Anzahl von Warengütem (2) aufweisen.

2. Heizvorrichtung nach Anspruch 1, **dadurch gekennzeichnet, dass** wenigstens zwei Heizstraßen (3, 5) nebeneinander angeordnet sind.

3. Heizvorrichtung nach Anspruch 1 oder 2, **dadurch gekennzeichnet, dass** eine Schleuseneinrichtung (14, 15) zwischen Heizstraße (3, 5) und Zufuhr- und/oder Abtransporteinrichtung (8, 9) angeordnet ist.

4. Heizvorrichtung nach wenigstens einem der vorangehenden Ansprüche, **dadurch gekennzeichnet, dass** die Schleuseneinrichtung (14, 15) einen Absauger aufweist.

5. Heizvorrichtung nach wenigstens einem der vorangehenden Ansprüche, **dadurch gekennzeichnet, dass** entlang der Heizstraße (3, 4, 5, 6) ein vorbestimmtes, insbesondere vorprogrammierbares Temperaturprofil einstellbar ist.

6. Heizvorrichtung nach wenigstens einem der vorangehenden Ansprüche, **dadurch gekennzeichnet, dass** wenigstens eine Heizstraße (3, 5) in der horizontalen Transportebene (12) angeordnet ist.

7. Heizvorrichtung nach wenigstens einem der vorangehenden Ansprüche, **dadurch gekennzeichnet, dass** Zufuhr- und/oder Abtransporteinrichtung (8, 9) einen in Transportrichtung (7) vor- bzw. nachgeordneten Transporteur (16, 17) aufweisen, über den das Warengut (2) der bzw. von der Heizvorrichtung (1) von außen zuführbar bzw. entnehmbar ist.

8. Heizvorrichtung nach wenigstens einem der vorangehenden Ansprüche, **dadurch gekennzeichnet, dass** dem Transporteur (16, 17) eine Schleuseneinrichtung (18, 19) mit insbesondere einem Absauger zugeordnet ist.

9. Heizvorrichtung nach wenigstens einem der vorangehenden Ansprüche, **dadurch gekennzeichnet, dass** ein Ofentransporteur (20) entlang der Heizstraße (3, 4, 5, 6) angeordnet ist.

10. Heizvorrichtung nach wenigstens einem der vorangehenden Ansprüche, **dadurch gekennzeichnet, dass** Zufuhr- und/oder Abtransporteinrichtung (8, 9) eine Durchschleuseinrichtung (21) aufweisen, die Transporteur (16, 17) und Ofentransporteur (20) in der horizontalen Transportebene (12) verbindet.

11. Heizvorrichtung nach wenigstens einem der vorangehenden Ansprüche, **dadurch gekennzeichnet, dass** die Durchschleuseinrichtung (21) einen bewegbaren Schieber (22) oder Warengutträger aufweist.

12. Heizvorrichtung nach wenigstens einem der vorangehenden Ansprüche, **dadurch gekennzeichnet, dass** die Durchschleuseinrichtung (21) drehbare Transportrollen (23) aufweist.

13. Heizvorrichtung nach wenigstens einem der vorangehenden Ansprüche, **dadurch gekennzeichnet, dass** Schieber (22) oder Warengutträger entgegengesetzt zur Transportrichtung (7) unterhalb der horizontalen Transportebene (12) in eine dem Transporteur (16, 17) zugeordnete Ausgangsstellung zurückbewegbar gelagert sind.

14. Heizvorrichtung nach wenigstens einem der vorangehenden Ansprüche, **dadurch gekennzeichnet, dass** der Schieber (22) einen Hubmechanismus (25) im wesentlichen zur vertikalen Höhenverstellung und eine im wesentlichen zwischen Ausgangsstellung (24) und einer der Heizstraße (3, 4, 5, 6) zugeordneten Abgabestellung (26) bewegbare Antriebseinrichtung (27) aufweist.

15. Heizvorrichtung nach wenigstens einem der vorangehenden Ansprüche, **dadurch gekennzeichnet, dass** zur Höhenverstellung des Warenguts (2) zwischen den übereinander angeordneten Heizstraßen (3, 4; 5, 6) die Zufuhr- und/oder Abtransporteinrichtungen (8, 9) Hubeinrichtungen (28) aufweisen.

16. Heizvorrichtung nach wenigstens einem der vorangehenden Ansprüche, **dadurch gekennzeichnet, dass** die Hubeinrichtung (28) die horizontale Transportebene (12) insbesondere in der Durchschleuseinrichtung (21) und eine vertikal oberhalb dieser Transportebene angeordnete obere Transportebene (29) miteinander verbindet.

17. Heizvorrichtung nach wenigstens einem der vorangehenden Ansprüche, **dadurch gekennzeichnet, dass** die Hubeinrichtung (28) zwischen horizontaler und oberer Transportebene (12, 29) angeordnete Transportebenen (30) als Puffereinrichtung (13) aufweist.

18. Heizvorrichtung nach wenigstens einem der vorangehenden Ansprüche, **dadurch gekennzeichnet, dass** die Hubeinrichtung (28) zwischen horizontaler und oberer Transportebene (12, 29) umlaufende Zahnketten (31) mit das Warengut (2) an zumindest drei Stellen untergreifenden und im wesentlichen in Richtung Warengut vorstehenden Transportzähnen (32) aufweist.

19. Heizvorrichtung nach wenigstens einem der vorangehenden Ansprüche, **dadurch gekennzeichnet, dass** jeweils zwei Zahnketten (31, 33, 34, 35) einander gegenüberliegend an in Transportrichtung (7) hinteren und an in Transportrichtung vorderen Seitenenden (36, 37) des im wesentlichen plattenförmigen Warenguts angeordnet sind.

20. Heizvorrichtung nach wenigstens einem der vorangehenden Ansprüche, **dadurch gekennzeichnet, dass** die Bewegung der Hubeinrichtung (28) getaktet ist.

21. Heizvorrichtung nach wenigstens einem der vorangehenden Ansprüche, **dadurch gekennzeichnet, dass** der oberen Transportebene (29) wenigstens ein Schieber (38) zur Übergabe des Warenguts (2) an die Heizstraße (4, 6) zugeordnet ist.

22. Heizvorrichtung nach wenigstens einem der vorangehenden Ansprüche, **dadurch gekennzeichnet, dass** Hubeinrichtungen (28) von Zufuhr- und Abtransporteinrichtung (8, 9) gleichartig aufgebaut sind.

23. Heizvorrichtung nach wenigstens einem der vorangehenden Ansprüche, **dadurch gekennzeichnet, dass** die Hubeinrichtung (28) vertikal und/oder senkrecht zur Transportrichtung (7) verstellbare, nebeneinander angeordnete Hub- und Haltegabeln (39, 40) aufweist, welche jeweils eine Anzahl von in Richtung Warengut (2) vorstehenden Transportzähnen (41) aufweisen.

24. Heizvorrichtung nach wenigstens einem der vorangehenden Ansprüche, **dadurch gekennzeichnet, dass** einer Haltegabel (40) bzw. einer Hubgabel (39) jeweils zwei an ihren in Transportrichtung (7) liegenden Enden (43, 44) angeordnete Hubgabeln (39, 42) bzw. Haltegabeln (40) zugeordnet sind.

25. Heizvorrichtung nach wenigstens einem der vorangehenden Ansprüche, **dadurch gekennzeichnet, dass** antreibbare Transportrollen (45) zumindest im Bereich von horizontaler und oberer Transportebene (12, 29) an der Haltegabel (40) und/oder Hubgabel (39, 42) angeordnet sind.

26. Heizvorrichtung nach wenigstens einem der vorangehenden Ansprüche, **dadurch gekennzeichnet, dass** Transporteur (16, 17) und/oder Ofentransporteur (20) zwei parallel zur Transportrichtung (7) umlaufende und voneinander beabstandete Transportbänder (46, 47) aufweisen, auf denen seitliche Kanten (48) des Warenguts (2) aufliegen.

27. Heizvorrichtung nach wenigstens einem der vorangehenden Ansprüche, **dadurch gekennzeichnet, dass** Heizstraßen (3, 4, 5, 6) und/oder Zuführ- und/oder Abtransporteinrichtungen (8, 9) und/oder Transporteure (16, 17) als Module ausgebildet sind.

## Claims

1. A heating device (1) for heating merchandise (2), especially printed boards, comprising a feeding device (8) provided in front of at least one heating line (3, 4, 5, 6) in the transport direction (7) of the merchandise (2) and a discharge device (9) provided behind the heating line (3, 4, 5, 6) in the transport direction (7), wherein a number of heating zones/devices (10) and/or cooling zones/devices (11) or the like are associated with the heating line, wherein at least two heating lines (3, 4; 5, 6) are disposed on top of each other to which merchandise (2) can be separately fed by the feeding device (8) from a horizontal transport level and that the merchandise can be separately discharged by the discharge device (9) from the heating lines back into a horizontal transport level (12), **characterized in that** the feeding and discharge devices (8, 9) comprise a vertical buffer (13) for buffering a plurality of articles of merchandise (2).

2. The heating device according to claim 1,
**characterized in that**
at least two heating lines (3, 5) are arranged next to each other.

3. The heating device according to claim 1 or 2,
**characterized in that**
a lock device (14, 15) is disposed between heating line (3, 5) and feeding and/or discharge device (8, 9).

4. The heating device according to at least one of the preceding claims,
**characterized in that**
the lock device (14, 15) comprises a suction implement.

5. The heating device according to at least one of the preceding claims,
**characterized in that**
a predetermined, especially pre-programmable, temperature profile can be adjusted along the heating line (3, 4, 5, 6).

6. The heating device according to at least one of the preceding claims,
**characterized in that**
at least one heating line (3, 5) is disposed in the horizontal transport level (12).

7. The heating device according to at least one of the preceding claims,
**characterized in that**
the feeding and/or discharge device (8, 9) comprise a transporter (16, 17) provided in front of or behind the same in the direction of transport (7), by which the merchandise (2) can be externally fed to or removed from the heating device (1).

8. The heating device according to at least one of the preceding claims,
**characterized in that**
a lock device (18, 19) especially comprising a suction implement is associated with the transporter (16, 17).

9. The heating device according to at least one of the preceding claims,
**characterized in that**
an oven transporter (20) is disposed along the heating line (3, 4, 5, 6).

10. The heating device according to at least one of the preceding claims,
**characterized in that**
the feeding device and/or the discharge device (8, 9) comprise a passthrough device (21) connecting the transporter (16, 17) and the oven transporter (20) in the horizontal transport level (12).

11. The heating device according to at least one of the preceding claims,
**characterized in that**
the passthrough device (21) comprises a movable slide (22) or merchandise carrier.

12. The heating device according to at least one of the preceding claims,
**characterized in that**
the passthrough device (21) comprises rotatable transport rollers (23).

13. The heating device according to at least one of the preceding claims,
**characterized in that**
the slide (22) or merchandise carrier is mounted to be movable backwards, opposite to the direction of transport (7) underneath the horizontal transport level (12), into a transporter (16, 17)-associated initial position.

14. The heating device according to at least one of the preceding claims,
**characterized in that**
the slide (22) comprises a lifting mechanism (25) essentially for vertical height adjustment and a driving means (27) essentially movable between the initial position (24) and a discharge position (26) associated with the heating lines (3, 4, 5, 6).

15. The heating device according to at least one of the preceding claims,
**characterized in that**
the feeding devices and/or discharge devices (8, 9) comprise lifting devices (28) between the heating lines (3, 4; 5, 6) arranged on top of each other for adjusting the height of the merchandise (2).

16. The heating device according to at least one of the preceding claims,
**characterized in that**
that the lifting device (28) interconnects the horizontal transport level (12) especially in the passthrough device (21) and an upper transport level (29) arranged vertically on top of said transport level.

17. The heating device according to at least one of the preceding claims,
**characterized in that**
that the lifting device (28) comprises transport levels (30) arranged between the horizontal and upper transport level (12, 29) as buffer (13).

18. The heating device according to at least one of the preceding claims,
**characterized in that**
the lifting device (28) comprises toothed chains (31) circulating between the horizontal and upper transport level (12, 29) with transport teeth (32) essentially projecting in the direction of the merchandise and gripping the merchandise (2) from underneath at at least three positions.

19. The heating device according to at least one of the preceding claims,
**characterized in that**
two toothed chains (31, 33, 34, 35) are each arranged opposite each other at rear and at front side faces (36, 37) of the essentially board-shaped merchandise in the direction of transport (7).

20. The heating device according to at least one of the preceding claims,
**characterized in that**
that the movement of the lifting device (28) is clocked.

21. The heating device according to at least one of the preceding claims,
**characterized in that**
at least one slide (38) for transferring the merchandise (2) to the heating line (4, 6) is associated with the upper transport level (29).

22. The heating device according to at least one of the preceding claims,
**characterized in that**
lifting devices (28) of the feeding and the discharge devices (8, 9) are constructed identically.

23. The heating device according to at least one of the preceding claims,
**characterized in that**
the lifting device (28) comprises adjacently disposed lifting and retaining forks (39, 40) which are vertically and/or perpendicularly adjustable to the direction of transport (7) and of which each comprises a number of transport teeth (41) projecting in the direction of the merchandise (2).

24. The heating device according to at least one of the preceding claims,
**characterized in that**
two lifting forks (39, 42) and retaining forks (40), respectively, are associated with a retaining fork (40) and a lifting fork (39), respectively, each being disposed at the ends (43, 44) thereof in the direction of transport (7).

25. The heating device according to at least one of the preceding claims,
**characterized in that**
drivable transport rollers (45) are disposed on the retaining fork (40) and/or the lifting fork (39, 42) at least in the area of the horizontal or upper transport level (12, 29).

26. The heating device according to at least one of the preceding claims,
**characterized in that**
the transporter (16, 17) and/or the oven transporter (20) comprise two transport belts (46, 47) circulating parallel to the direction of transport (7) and spaced apart from each other, on which lie lateral edges (48) of the merchandise (2).

27. The heating device according to at least one of the preceding claims,
**characterized in that**
heating lines (3, 4, 5, 6) and/or feeding and/or discharge devices (8, 9) and/or transporters (16, 17) are designed as modules.

## Revendications

1. Dispositif de chauffage (1) pour le réchauffement d'articles (2), en particulier de plaquettes de circuits imprimés, avec un dispositif d'amenée (8) en amont d'au moins une ligne de chauffage (3, 4, 5, 6) dans le sens de transport (7) des articles (2) et un dispositif d'évacuation (9) en aval de la ligne de chauffage (3, 4, 5, 6) dans le sens de transport (7), un certain nombre de zones/ dispositifs de chauffage (10) et/ou de zones/ dispositifs de refroidissement (11) ou de dispositifs semblables étant affectés à la ligne de chauffage, au moins deux lignes de chauffage (3, 4 ; 5, 6) auxquelles des articles (2) provenant d'un niveau de transport horizontal peuvent être amenés séparément par le dispositif d'amenée (8) étant superposées et les articles pouvant être évacués séparément des lignes de chauffage par le dispositif d'évacuation (9) pour revenir à un niveau de transport horizontal (12), **caractérisé en ce que** les dispositifs d'amenée et d'évacuation (8, 9) comportent un dispositif tampon vertical (13) pour le stockage intermédiaire d'un certain nombre d'articles (2).

2. Dispositif de chauffage selon la revendication 1, **caractérisé en ce qu'**au moins deux lignes de chauffage (3, 5) sont disposées l'une à côté de l'autre.

3. Dispositif de chauffage selon la revendication 1 ou 2, **caractérisé en ce qu'**un dispositif de sas (14, 15) est disposé entre la ligne de chauffage (3, 5) et le dispositif d'amenée et/ou d'évacuation (8, 9).

4. Dispositif de chauffage selon au moins une des revendications précédentes, **caractérisé en ce que** le dispositif de sas (14, 15) comporte un aspirateur.

5. Dispositif de chauffage selon au moins une des revendications précédentes, **caractérisé en ce que** le long de la ligne de chauffage (3, 4, 5, 6) un profil de température prédéterminé, en particulier préalablement programmable, peut être réglé.

6. Dispositif de chauffage selon au moins une des revendications précédentes, **caractérisé en ce qu'**au moins une ligne de chauffage (3, 5) est disposée au niveau de transport horizontal (12).

7. Dispositif de chauffage selon au moins une des revendications précédentes, **caractérisé en ce que** les dispositifs d'amenée et/ou d'évacuation (8, 9) comportent un transporteur placé en amont et/ou en aval (16, 17) dans le sens de transport (7), via lequel les articles (2) peuvent être amenés au dispositif de chauffage (1) de l'extérieur et/ou évacués de ce dernier.

8. Dispositif de chauffage selon au moins une des revendications précédentes, **caractérisé en ce qu'**un dispositif à sas (18, 19) comprenant en particulier un aspirateur est affecté au transporteur (16, 17).

9. Dispositif de chauffage selon au moins une des revendications précédentes, **caractérisé en ce qu'**un transporteur pour four (20) est disposé le long de la ligne de chauffage (3, 4, 5, 6).

10. Dispositif de chauffage selon au moins une des revendications précédentes, **caractérisé en ce que** le dispositif d'amenée et/ou d'évacuation (8, 9) comporte un dispositif de passage (21) qui relie le transporteur (16, 17) et le transporteur pour four (20) au niveau de transport horizontal (12).

11. Dispositif de chauffage selon au moins une des revendications précédentes, **caractérisé en ce que** le dispositif de passage (21) comporte un coulisseau (22)
ou un support d'articles mobile.

12. Dispositif de chauffage selon au moins une des revendications précédentes, **caractérisé en ce que** le dispositif de passage (21) comporte des galets de transport (23) rotatifs.

13. Dispositif de chauffage selon au moins une des revendications précédentes, **caractérisé en ce que** le coulisseau (22) ou le support d'articles sont placés en dessous du niveau de transport horizontal (12), dans une position initiale affectée au transporteur (16, 17) et de manière mobile dans le sens contraire au sens de transport (7) en pouvant retourner à cette position initiale.

14. Dispositif de chauffage selon au moins une des revendications précédentes, **caractérisé en ce que** le coulisseau (22) comporte un mécanisme de levage (25), essentiellement pour le réglage vertical de la hauteur, et un dispositif d'entraînement (27), essentiellement mobile entre la position initiale (24) et une position de remise (26) affectée à la ligne de chauffage (3, 4, 5, 6).

15. Dispositif de chauffage selon au moins une des revendications précédentes, **caractérisé en ce que**, pour régler la hauteur des articles (2), les dispositifs d'amenée et/ou d'évacuation (8, 9) comportent des dispositifs de levage (28) entre les lignes de chauffage superposées (3, 4 ; 5, 6).

16. Dispositif de chauffage selon au moins une des revendications précédentes, **caractérisé en ce que** le dispositif de levage (28) relie l'un à l'autre le niveau de transport horizontal (12), en particulier dans le dispositif de passage (21), et un niveau de transport supérieur (29) disposé verticalement au-dessus de ce niveau de transport.

17. Dispositif de chauffage selon au moins une des revendications précédentes, **caractérisé en ce que** le dispositif de levage (28) comporte des niveaux de transport (30) sous forme de dispositif tampon (13) disposés entre les niveaux de transport horizontal et supérieur (12, 29).

18. Dispositif de chauffage selon au moins une des revendications précédentes, **caractérisé en ce que** le dispositif de levage (28) comporte entre les niveaux de transport horizontal et supérieur (12, 29) des chaînes dentées tournantes (31) avec des dents de transport (32) saisissant les articles (2) par le bas à au moins trois endroits et dépassant essentiellement en direction des articles.

19. Dispositif de chauffage selon au moins une des revendications précédentes, **caractérisé en ce que** deux chaînes dentées (31, 33, 34, 35) sont à chaque fois disposées l'une en face de l'autre à des extrémités latérales arrière dans le sens de transport (7) et avant dans le sens de transport (36, 37) des articles essentiellement en forme de plaques.

20. Dispositif de chauffage selon au moins une des revendications précédentes, **caractérisé en ce que** le mouvement du dispositif de levage (28) est cadencé.

21. Dispositif de chauffage selon au moins une des revendications précédentes, **caractérisé en ce qu'**au moins un coulisseau (38) est affecté au niveau de transport supérieur (29) pour la remise des articles (2) à la ligne de chauffage (4, 6).

22. Dispositif de chauffage selon au moins une des revendications précédentes, **caractérisé en ce que** des dispositifs de levage (28) des dispositifs d'amenée et d'évacuation (8, 9) présentent une structure du même type.

23. Dispositif de chauffage selon au moins une des revendications précédentes, **caractérisé en ce que** le dispositif de levage (28) comporte des fourches de levage et de maintien (39, 40) réglables verticalement et/ou perpendiculairement par rapport au sens de transport (7) et disposées l'une à côté de l'autre, qui comportent chacune un certain nombre de dents de transport (41) qui dépassent en direction des articles (2).

24. Dispositif de chauffage selon au moins une des revendications précédentes, **caractérisé en ce que** deux fourches de levage (39, 42) et/ou fourches de maintien (40) disposées à leurs extrémités (43, 44) situées dans le sens de transport (7) sont chaque fois affectées à une fourche de maintien (40) et/ou à une fourche de levage (39).

25. Dispositif de chauffage selon au moins une des revendications précédentes, **caractérisé en ce que** des galets de transport pouvant être entraînés (45) sont, au moins dans la zone des niveaux de transport horizontal et supérieur (12, 29), disposés sur la fourche de maintien (40) et/ou la fourche de levage (39, 42).

26. Dispositif de chauffage selon au moins une des revendications précédentes, **caractérisé en ce que** le transporteur (16, 17) et/ou le transporteur pour four (20) comportent deux bandes de transport (46, 47) qui tournent parallèlement au sens de transport (7) et sont écartées l'une de l'autre, sur lesquelles des arêtes latérales (48) des articles (2) s'appuient.

27. Dispositif de chauffage selon au moins une des revendications précédentes, **caractérisé en ce que** des lignes de chauffage (3, 4, 5, 6) et/ou des dispositifs d'amenée et/ou d'évacuation (8, 9) et/ou des transporteurs (16, 17) sont réalisés sous forme de modules.
